# EUROPEAN PATENT APPLICATION

(11) **EP 3 964 427 A1**
(43) Date of publication of application: **09.03.2022**
(21) Application number: 20194481.6
(22) Date of filing: 03.09.2020
(51) Int. Cl.: B62D 23/00, B62D 21/02, B62D 33/00, B62D 33/06

(54) **CHASSIS FOR AN ELECTRIC VEHICLE AND ELECTRIC VEHICLE COMPRISING THE CHASSIS**

(71) Applicant: Volta Trucks Limited, Bushey, Hertfordshire WD23 2GR (GB)
(72) Inventor: WALÖEN, Kjell, London, EC1V 2NX (GB); NORDEN, Carl-Magnus, London, EC1V 2NX (GB); PRICE, Steven, Banbury, Oxfordshire OX16 4XD (GB); GILLOTT, Russell, Warwick, Warwickshire CV34 5DR (GB)
(74) Representative: Sharman, Thomas Alexander

(57) **Abstract**

A chassis for an electric vehicle (100) driveable on a driving surface, the electric vehicle comprising a cab portion (102) and a cargo-carrying portion (104). The chassis comprises: a front chassis portion (506) configured to support a cab portion and defining a first seat mounting surface for supporting a seat for a driver; a rear chassis portion (500) configured to support a cargo-carrying portion, the rear chassis portion comprising a principal plane; and an intermediate chassis portion (600) coupling the front chassis portion and the rear chassis portion. The intermediate chassis portion (600) forms a transition between the front chassis portion (506) and the rear chassis portion (500) and is configured so that the first seat mounting surface for supporting a seat for a driver is positionable closer than the principal plane of the rear chassis portion to a driving surface. An electric vehicle comprising the chassis is also provided.

## Description

The present invention relates to a chassis for an electric vehicle and to an electric vehicle comprising the chassis.

The chassis of the present invention is particularly suitable for use in electric delivery vehicles, such as electric trucks, particularly electric trucks for use in urban environments. However, the invention is also suitable for other electric vehicles, including, but not limited to: electric lorries; electric articulated lorries; electric trailer trucks; electric rigs; electric semis; electric semitrailers; electric vans etc.; all for use in urban or non-urban environments.

Trucks are often used to transport a variety of cargo, including in densely populated urban areas. Due to the relative size and weight of trucks and lorries compared to other road users and the high cab or elevated driver positioning commonly provided by these vehicles, they are typically equipped with a variety of safety features, such as a large number of mirrors, sideguards, and audible and visual alerts. In spite of this, where trucks commonly share the road with cyclists and pedestrians, particularly in urban areas, accident and fatalities involving trucks and other large vehicles remain frequent. For example, although large trucks make up only 3.4 % of traffic in New York City, they are responsible for 32 % of all cyclist fatalities.

In recent years, much research and development has been invested in electric vehicles, including electric trucks to replace conventional, fossil fuel-dependent, vehicles including trucks. Electric vehicles, including electric trucks, are preferable because they are widely considered to be more environmentally friendly than conventional vehicles. Also, in urban environments, their use may result in a significant reduction in pollution attributable to fossil fuel-powered vehicles.

Trucks, including electric trucks, do not only pose a safety and health risk to other road users, but also their drivers. In many countries, in particular industrialised ones, truck drivers are an aging population. To enter and egress from the elevated cab of a diesel truck, drivers have to climb up and down steep steps, which is challenging for aging drivers. Indeed, falls from a height are one of the most common causes for injuries in truck drivers.

The inventors have appreciated the need for a chassis for an electric vehicle and an electric vehicle comprising the chassis which may provide enhanced driver visibility and which may therefore reduce a risk of harm to other road users, in particular cyclists and pedestrians when the vehicle is used in urban environments,. The inventors have also appreciated the need for a chassis for an electric vehicle and an electric vehicle comprising the chassis which facilitate entry and exit of a driver or other occupant to or from the vehicle.

The present invention is defined by the appended independent claims, to which reference should now be made.

In particular, the present invention provides, in a first aspect, a chassis for an electric vehicle.

The present invention provides, in a second aspect, an electric vehicle comprising the chassis of the present invention in a first aspect.

Preferred or advantageous features of the invention are set out in the dependent claims to which reference should now be made.

In the first aspect, the invention provides a chassis for an electric vehicle driveable on a driving surface, the electric vehicle comprising a cab portion and a cargo-carrying portion, the chassis comprising: a front chassis portion configured to support a cab portion and defining a first seat mounting surface for supporting a seat for a driver; a rear chassis portion configured to support a cargo-carrying portion, the rear chassis portion comprising a principal plane; and an intermediate chassis portion coupling the front chassis portion and the rear chassis portion.

The chassis is characterised in that: the intermediate chassis portion forms a transition between the front chassis portion and the rear chassis portion and is configured so that the first seat mounting surface for supporting a seat for a driver is positionable closer than the principal plane of the rear chassis portion to a driving surface.

The terms "rear", "intermediate", and "front" refer herein to relative positions on the chassis, or on a vehicle comprising the chassis. As such, "rear" refers to parts of the chassis, or vehicle, which are closer to the rear end of the chassis, or vehicle, i.e. the part of the chassis, or vehicle, which is furthest from the normal direction of travel. "Front" refers to parts of the chassis, or vehicle, which are closer to the front end of the chassis, or vehicle, i.e. the part of the chassis, or vehicle, which is closest to the normal direction of travel.

The term "principal plane" refers to the plane defined by the major face of the rear chassis portion. The principal plane may be configured to support a load-bearing surface, or deck, of a vehicle. That is, the principal plane may be configured to support the load-bearing surface of a vehicle which provides the majority of space and/or volume for carrying cargo. This may be referred to as the trailer.

The term "driving surface" refers to a surface on which a vehicle comprising or encompassing the chassis of the present invention may drive. It may alternatively be referred to as ground, ground surface, road or the like. The driving surface may be contacted by the wheels of the vehicle comprising or encompassing the chassis of the present invention.

By providing a split-level chassis, i.e. a chassis wherein a first seat mounting surface for supporting a seat for a driver is positionable closer than the principal plane of the rear chassis portion to a driving surface, the position of a driver of a vehicle comprising or embodying the present invention may be lower than in some known vehicles. This lower driver position may enable the driver's eye line to be at a similar distance from the driving surface or ground as some other road users, including other drivers in their vehicles and/or cyclists and/or pedestrians.

An electric vehicle, such as an electric truck, does not require have a requirement for a bulk internal combustion engine and gearbox of the type typically used in convention, mostly diesel, trucks. As such, the first seat mounting surface for supporting a seat for a driver may be configured to be lower for an electric vehicle comprising or embodying a chassis of the present invention.

Advantageously, an electric vehicle comprising or embodying the present invention may be more suitable for use in an urban environment. It may be particularly suitable as an electric delivery truck. The enhance visibility may lead to a vehicle comprising the chassis to be less likely to cause injury or to otherwise cause harm to other road users.

Further advantageously, entry into and egress from the cab portion of an electric vehicle comprising or embodying the chassis of the present invention may be significantly easier, as the driver position may be lower, i.e. closer to a driving surface, than for some known types of vehicles. This may reduce a risk of injury to a driver.

Preferably, the front chassis portion comprises a space frame-type construction. This may be an effective means of constructing a front chassis portion having the desired stiffness and rigidity and while accommodating the various requirements of a cab and providing the desired shape and configuration of the cab.

Preferably, the rear chassis portion comprises a ladder-type construction. This may be an effective and well-known means for constructing a rear chassis portion having the desired stiffness and rigidity while accommodating the various requirements of a chassis and/or packaging the various components required for the operation of an electric vehicle.

The intermediate chassis portion may form a transition between the space-frame-type construction of the front chassis portion and the ladder-type construction of the rear chassis portion.

Preferably, the space frame-type construction of the front chassis portion is coupled to the intermediate chassis portion and the front chassis portion. Coupling the space frame-type construction to both the intermediate chassis portion and the front chassis portion may improve the stability of the space frame-type construction.

Preferably, the space frame-type construction may be coupled to the front portion and/or the intermediate portion using one or more fasteners of one or more different types, for example studs and/or bolts. Alternatively the fasteners may be screws or rivets, or another suitable fixings.

Preferably, a stiffness of the front chassis portion is greater than a stiffness of the rear chassis portion. This may result in the front chassis portion being subjected to lower forces and thereby may provide a safer cab portion for cab occupants in case of an accident.

Preferably, the intermediate chassis portion comprises: a first pair of chassis members coupled to the rear chassis portion and positioned substantially orthogonal to the principal plane of the rear chassis portion; and a second pair of chassis members coupled to the first pair of chassis members and positioned substantially parallel to the principal plane of the rear chassis portion.

The term "substantially" refers herein to an approximate positioning, i.e. the first pair of chassis members of the intermediate chassis portion may be substantially orthogonal to the principal plane of the rear chassis portion if an angle between them is between about 80 degrees and about 100 degrees.

More preferably, the intermediate chassis portion further comprises a third pair of chassis members extending between the first pair of chassis members and coupled proximate a second end to the second pair of chassis members and positioned at an angle to the principal plane of the rear chassis portion. As such, the chassis may generally have a dog-leg type configuration.

Preferably, the front chassis portion is removably coupled to the intermediate portion by at least one fixing. The at least one fixing may be a fastener, preferably a stud or bolt. It may alternatively be a screw or a rivet or any other suitable fixing.

Preferably, the rear chassis portion is fixedly coupled to the intermediate chassis portion by at least one joint which may be welded, or spot-welded or brazed or otherwise coupled by another suitable process that will be apparent to the skilled person. Advantageously, welding may maximise the available physical connection between the intermediate chassis portion and the rear chassis portion, which allows for stress between the intermediate chassis portion and rear chassis portion to be distributed across a larger physical connection. The rear chassis portion may additionally be coupled to the intermediate chassis portion by one or more other types of fixing means, for example, at least one suitable fastener, which may include a stud or a bolt.

A length of the intermediate chassis portion may be minimised. In other words, the intermediate portion of the chassis may be minimised in a longitudinal direction. It may be have a shorter length than the front and/or the rear chassis portion. This may serve to maximise the available space for the cab portion and any components which may be arranged in or around the rear portion of the chassis.

Preferably, the chassis further comprises at least one gusset coupling the intermediate chassis portion and the rear chassis portion. Advantageously, the at least one gusset may reduce stress concentrations in the connections between the intermediate portion and the rear portion. If the intermediate portion is welded to the rear portion, durability of the welded joints may be a concern. As such, reducing the stress concentration in the or each welded joint may improve the durability of the chassis.

Preferably, the at least one gusset comprises a first portion and a second portion, wherein the first portion is substantially orthogonal to the second portion. This may allow for the gusset to more efficiently distribute strain between the intermediate chassis portion and the rear chassis portion.

Preferably, at least one of the first portion and the second portion comprises a curved section. This may allow for the gusset to more efficiently distribute strain between the intermediate chassis portion and the rear chassis portion.

Preferably, the chassis further comprises a brace member between the intermediate portion and the front portion. As the intermediate portion is substantially perpendicular to the front portion the brace member may reduce the concentration of stress at the corners.

Preferably, the front portion of the chassis is configured so that the first seat mounting surface is located substantially on a longitudinal centreline of the chassis. Advantageously, due to the central first seat mounting surface for supporting a seat for a driver, a driver may have a direct field of vision which is significantly wider than in some known types of vehicles wherein the seat for a driver is not on a longitudinal centreline of the vehicle (or chassis). This wider direct field of vision may also reduce the number of mirrors and other safety features which may be required, and the size of any blind spots.

Preferably, the front chassis portion defines a first wheel arch liner forming a second seat mounting surface for a seat for a second cab occupant; the front chassis portion defines a second wheel arch liner forming a second seat mounting surface for a seat for a third cab occupant; and at least one of the second and the third seat mounting surfaces is rearward of the first seat mounting surface. This may provide a driver with a wider direct field of vision, as at least one of the seats for the second and third cab occupants are rearward of the first seat mounting surface for supporting a seat for a driver, and as such, the second and third cab occupants are not within the direct field of vision of the driver. This may also result in efficient use of space in the cab portion.

If both the second and the third seat mounting surfaces are rearward of the first seat mounting surface, three occupants (one driver, two passengers) of a vehicle comprising or encompassing the present invention may be seated in a V-formation, with the driver sitting at the front with an improved field of vision compared to some known vehicles, in particular a known type of truck, in which a passenger sits adjacent to, and in line with, the driver.

Preferably, the front chassis portion comprises a pair of A-pillars bordering a front screen, arranged so that a longitudinal plane of each A-pillar is angled relative to a longitudinal centreline of the chassis. This may ensure a that the front chassis has minimal impact upon a driver's field of vision.

In the second aspect, the present invention provides an electric vehicle comprising a cab portion, a cargo-carrying portion and a chassis according to the first aspect.

Preferably, the cab portion is configured so as to be narrower at a front end than at a rear end, and is generally curved from the front end to the rear end. This may minimise the cross-section of the front end of the vehicle, so as to make it less intimidating to pedestrians and other road users. It may also help to reduce the aerodynamic drag of the electric vehicle.

Preferably, a front end of a roof of the cab portion is closer to a driving surface than a rear end of the cab portion and the roof is curved from a front end to a rear end, the curvature continuing onto a front end of the cargo carrying portion. This may minimise the cross-section of the front end of the vehicle, so as to make it less intimidating to pedestrians and other road users. Further advantageously, it may also help to reduce the aerodynamic drag of the electric vehicle.

The cab portion may provide a spacious interior and one that is, or feels, more spacious than an interior of some known vehicles. It may have a minimalistic design which incorporates a plurality of human-machine interface screens in place of more traditional instruments.

Preferably, the electric vehicle further comprises a pair of moveable doors extending substantially between a floor of the cab portion and a ceiling of the cab portion and moveable between an open position in which the doors are rearward of an opening and a closed position in which the doors obstruct an opening. Advantageously, large, full-height doors may facilitate entry and egress without adversely affecting the driver's field of vision.

Preferably, each one of the pair of movable doors is angled relative to a front end surface of the electric vehicle by less than 90 degrees.

Preferably, the front chassis portion defines a step to facilitate entry into and exit from the cab portion, the step being positioned inside the cab portion and being adjacent one of the moveable doors when in the closed position.

Advantageously, providing a step may facilitate entry and exit from the cab portion. In particular, the step may allow a driver (or other occupant) to enter the cab portion in a single stride, providing improved convenience for entry into and egress from the cab portion.

More preferably, the front chassis portion may define a step adjacent each one of the moveable doors.

Preferably, the or each step may extend across at least 10 % of a width of the electric vehicle.

The dimensions of the vehicle may be referred to as the vehicle's "length", i.e. the extent from a front end to a rear end along a longitudinal axis of the vehicle, its "height", i.e. the extent from the driving surface, i.e. the ground, to a top surface (either of a cab portion or of a cargo-carrying portion), and its "width", i.e. the extent from one side of the vehicle to the other side of the vehicle along a transverse axis of the vehicle.

The electric vehicle may comprise a beam axle. In other embodiments, the electric vehicle may alternatively comprise individual suspension for each wheel. If a beam axle is used, a substantially dog-leg type or step-down configuration of the chassis is beneficial. If individual suspension is used for each wheel, the intermediate portion may be sloped or angled or the configuration of the chassis may be otherwise different from a dog-leg or step-down type configuration.

Preferably, the electric vehicle comprises at least one battery pack. More preferably, the at least one battery pack is removable. This may reduce downtimes during charging of the batteries and facilitate maintenance and replacement of the at least one battery pack.

Preferably, the at least one vehicle comprises at least one drive motor.

More preferably, at least one of the at least one battery pack and the at least one drive motor is positioned within the rear chassis portion. This allows for the at least one battery pack, or the at least one drive motor, to be better protected in case of accident, and to optimise use of space in the rear chassis portion.

Preferably, the electric vehicle, or the chassis, may comprise a sub-frame positioned on or coupled to the cargo-carrying portion and/or or the rear chassis portion. The sub-frame may be configured to receive a cargo container.

Further features of the second aspect may be described above in relation to the first aspect and vice-versa.

Any feature in one aspect of the invention msay be applied to other aspects of the invention, in any appropriate combination. Furthermore, any, some and/or all features in one aspect may be applied to any, some and/or all features in any other aspect, in any appropriate combination.

It should also be appreciated that particular combinations of the various features described and defined in any aspects of the invention may be implemented and/or supplied and/or used independently.

One or more example embodiments of the invention will now be described with reference to the accompanying figures, in which:
Figure 1 is a perspective view of an electric vehicle embodying the present invention;
Figure 2 is a side view of the electric vehicle of Figure 1;
Figure 3 is a front view of the electric vehicle of Figures 1 and 2,
Figure 4 is a perspective view of the electric vehicle of Figures 1 to 3 without its enclosed cargo-carrying box;
Figure 5 is a perspective view of a chassis of an electric vehicle embodying the present invention;
Figure 6a is an enlarged perspective view of a front section of the chassis of an electric vehicle of Figure 5;
Figure 6b is a side view of the chassis of an electric vehicle of Figures 5 and 6a;
Figure 7 is an enlarged perspective view of a front section of the chassis of an electric vehicle embodying the present invention of Figures 5, 6a, and 6b, with its space frame-type cab construction removed;
Figure 8a is an enlarged perspective view of a front chassis portion and an intermediate chassis portion of the chassis of an electric vehicle embodying the present invention of Figures 5 to 7; and
Figure 8b is an enlarged rear perspective view of the front chassis portion and the intermediate chassis portion of the chassis of Figure 8a.

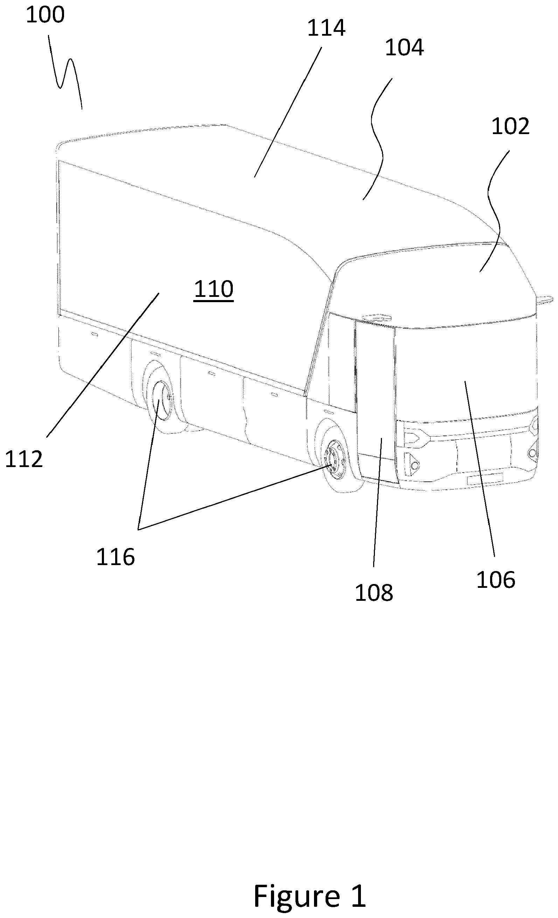

Figure 1 illustrates an electric vehicle 100 embodying the present invention. In this example, the electric vehicle is an electric truck. The truck 100 has a cab portion 102 and a cargo-carrying portion 104.

In this example, the truck is an electric urban delivery truck comprising a battery electric drive.

The cab portion 102 as a whole is shaped such that a front end of the cab portion 102 is narrower than a rear end, and that the cab portion 102 widens from the narrower front end to the wider rear end. The sides of the cab may be at least partially curved between the front and rear end of the cab. This may help to define an aerodynamically efficient and visually memorable shape.

Similarly, a front end of a roof 300 of the cab portion 102 is closer to a driving surface than a rear end of the roof 300 of the cab portion 102. The roof 300 of the cab portion 102 may be at least partially curved between a front end of the roof 300 and a rear end of the roof 300, the curvature continuing onto a front end of the cargo-carrying portion 104, e.g. the cargo-carrying box 110.

The taper, or curvature, from the narrower and lower front end of the cab portion 102 to the wider and higher rear end of the cab portion 102 minimised the cross-section of the truck 100 at its front end, so as to make it less intimidating to pedestrians and other road users.

The cab portion 102 comprises a large, wraparound, transparent, front screen 106 and a pair (only one shown in Figure 1) of full-height, transparent, doors 108. The open design of the cab portion 102 provides the driver with enhanced visibility compared to some known vehicles. The cargo-carrying portion 104 comprises a cargo-carrying box 110, which has two (only one shown in Figure 1) side surfaces 112 and a top surface 114. The cargo-carrying box 110 of the cargo-carrying portion 104 comprises a rear door 208 which may be similar to a rear door of some known trucks or trailers to allow the truck 100 to be compatible with existing goods infrastructure.

The truck 100 has a plurality of wheels 116 in contact with a driving surface (i.e. a road or track on which it is standing or travelling). The front wheels of the truck 100 comprise a rigid axle suspension system. In an alternative embodiment, the front wheels may comprise independent front suspension.

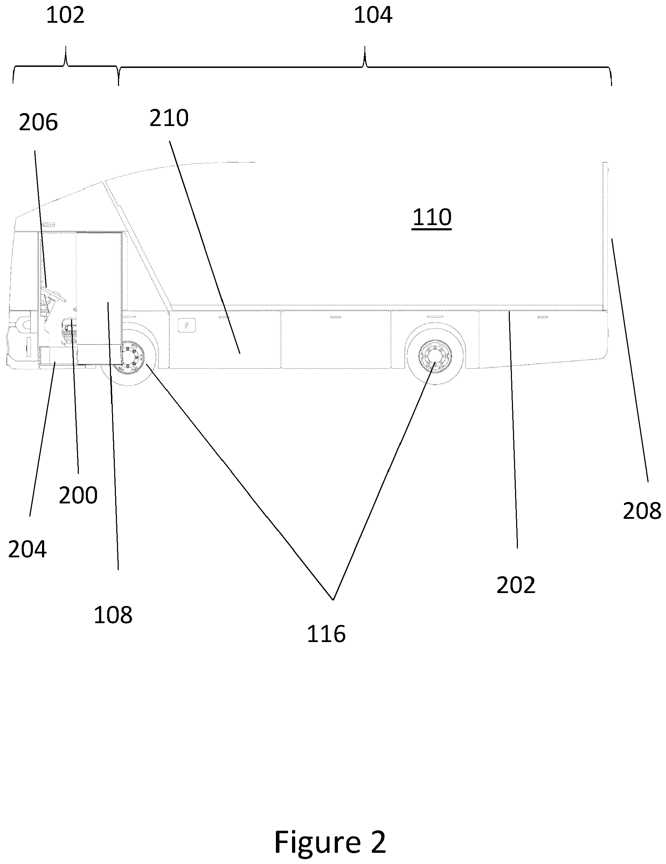

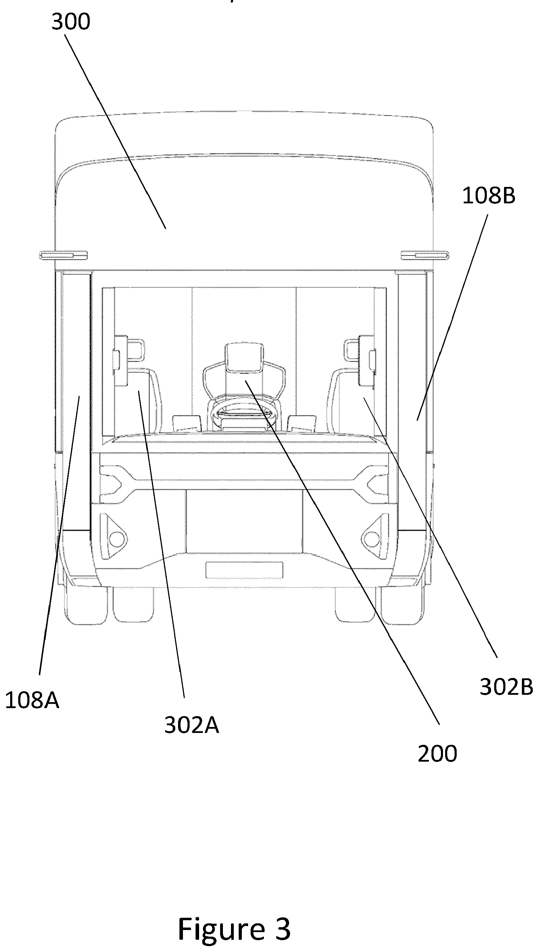

The doors 108 are selectively moveable between a closed position (as shown in Figures 1, 3, and 4) in which the doors 108 obstruct an opening in the cab portion 102 and an open position (as shown in Figure 2) in which the doors 108 are moved rearward and are positioned at least partially rearward of the opening. The doors 108 are movable between the closed position and the open position by a sliding motion. The sliding mechanism may be the same as or similar to a door mechanism used in existing vehicles such as in prior art trams or trains. In an open position, the door 108 allows an occupant such as a driver to enter a cab of the truck 100, so as to access a driver seat 200. The doors 108A, 108B are positioned on the angled or curved side surfaces 112 of the truck 100. As such they are at least partially visible when the truck 100 is viewed from a position in front of the truck, as shown in Figure 3.

The doors 108A, 108B are substantially symmetrical and extend substantially between a floor and a ceiling of the cab portion 102. Due to the significant angle between the doors 108A, 108B, and the side surfaces 112 of the truck 100, the steering may be limited by a hardware limiter or a software limiter when one or both of the doors 108A, 108B are in the open position, so as to prevent the opened door hitting a wheel 116 or a side surface 112 of the truck 100 when the vehicle is turning.

As can be most easily appreciated from Figure 2, the driver seat 200, i.e. a sitting surface for the driver within the cab portion 102, is lower than a principal plane or load-bearing surface 202 of the cargo-carrying portion 104. In other words, the sitting surface for the driver (or, a first seat mounting surface for supporting a driver seat 200) is closer than the principal load-bearing surface 202 of the cargo-carrying portion 104 to a driving surface with which the wheels 116 are in contact. In other words, a distance between the sitting surface for the driver (or, a first seat mounting surface for supporting a driver seat 200) and the driving surface is smaller than a distance between the principal load-bearing surface 202 of the cargo-carrying portion 104 and the driving surface. This may the case at least with the driving surface is substantially flat.

In other words, in many known types of trucks, a distance between the sitting surface for a driver and the driving surface is larger than a distance between the principal-load bearing surface and the driving surface.

The truck 100 is configured so that the eyes of an average driver in driver seat 200 may be at a height of about 180 centimetres from the driving surface. This may mean that the driver's eyes are at a similar height (or distance from the driving surface) as at least some other road users, for example drivers of other vehicles, cyclists, or pedestrians. In particular, the truck 100 is configured so that the eyes an average driver in driver seat 200 are lower i.e. closer to the driving surface than in some other known types of trucks where a sitting surface for a driver and therefore the driver's eyes are positioned comparatively higher or further from a driving surface.

The cab portion 102 contains a step 204 adjacent, and just inside of, each of the doors 108A, 108B. This is designed to allow a driver, or other occupant of the cab, to enter into, or egress from, the cab easily, without having to climb steep and potentially dangerous steps, as is commonly required in a some known trucks. The step 204 may be deeper than steps of some known trucks.

As a result of the deep step 204 and the full-height, rearward-sliding doors 108 A, 108B, it may be feasible for a driver to enter the cab portion 102 of the truck 100 in a single stride. This may providing enhanced driver safety and convenience when entering and exiting the cab portion 102 compared to many known trucks with elevated cabs.

The truck 100 comprises air suspension. This may help to maintain a low height of the step 204, independent of a weight of the cargo being transported. It may also enable the truck to be lowered for exiting the truck and raised when the truck is moving.

The cab portion 102 further contains a steering wheel 206.

As shown in the front view in Figure 3, the driver seat 200 is located substantially centrally in the cab and on a longitudinal centreline of the truck 100. As such, the driver seat 200 is positioned centrally with regard to a width of the truck.

Passenger seats 302A, 302B are located on either side, and rearward, of the driver seat 200. The driver seat 200 and the passenger seats 302A, 302B are arranged in an arrow or V-shaped configuration.

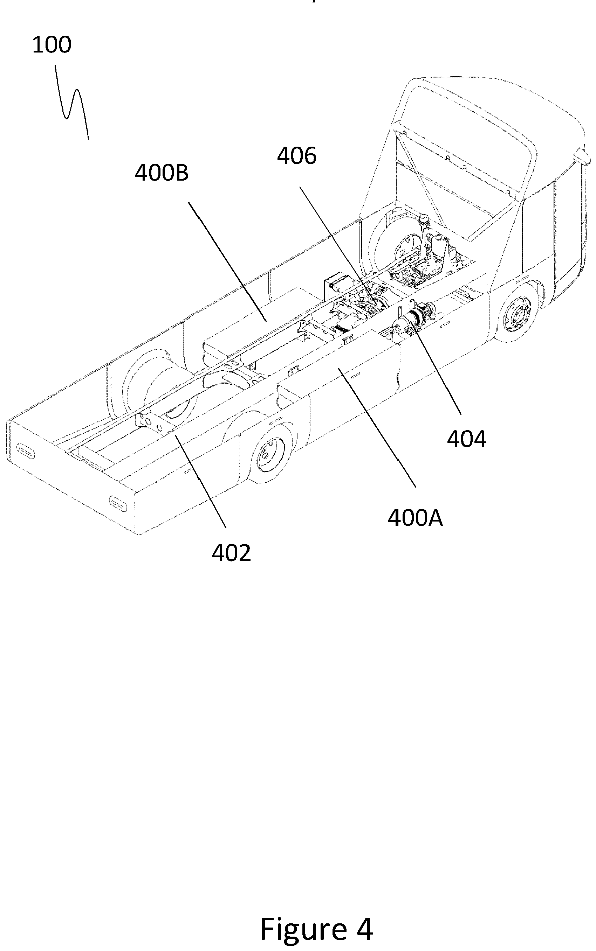

As shown in Figure 4, the truck 100 comprises two battery packs 400A, 400B, which are positioned in the cargo-carrying portion 104, beneath the principal load-bearing surface 202. The battery packs 400A, 400B are shown to be positioned on either side of a central chassis 402. Alternatively one or both of the battery packs 400A, 400B may be positioned within the central portion of the chassis 402.

The battery packs 400A, 400B are accessible, e.g. for removal, replacement, or maintenance, by removing side panelling 210 from the truck 100.

Beneath the principal load-bearing surface 202, the truck 100 has a single traction motor 406 along with a drive shaft, which is driven by the traction motor 406 to provide torque. Alternatively, the wheels may be driven independently.

The truck 100 further has an air compressor and a water pump for providing fluid cooling to the power electronics.

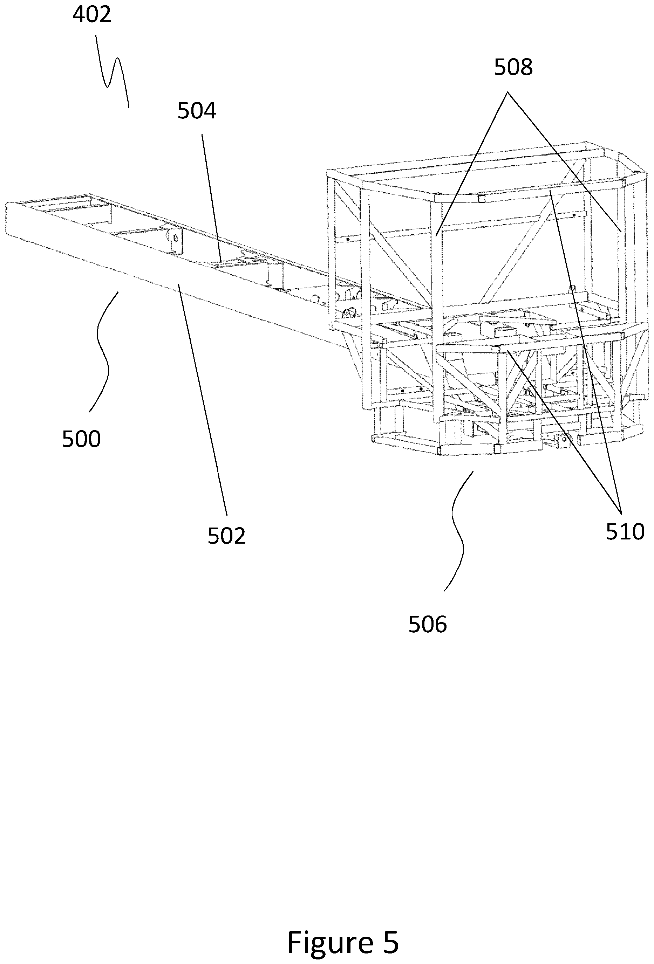

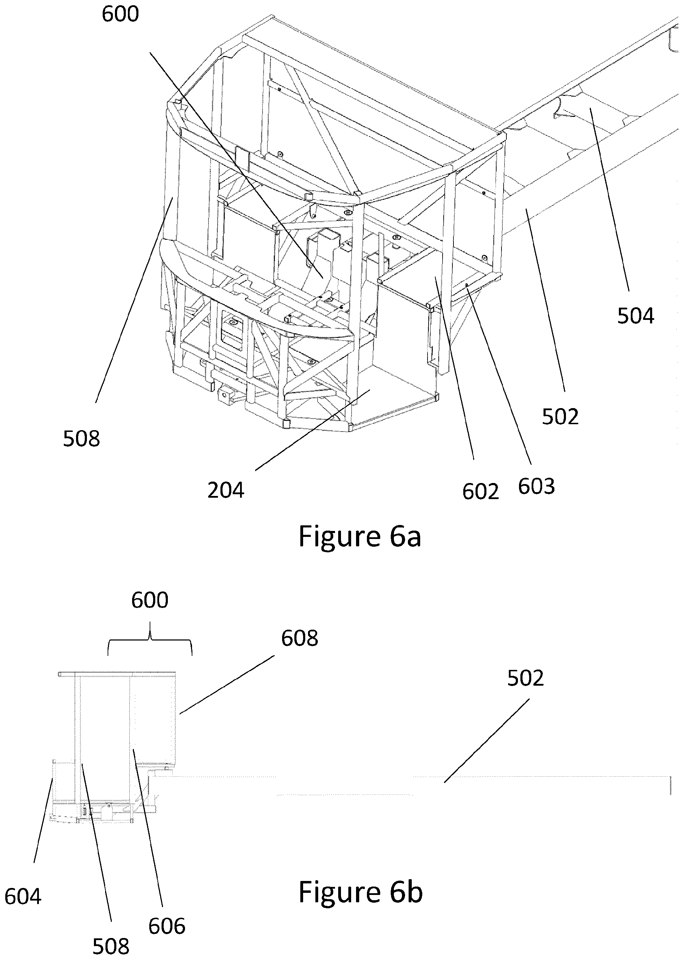

The truck 100 is provided with a split-level (or step-down) type chassis 402. This is shown in more detail in Figures 5, 6a, 6b, 7, 8a, and 8b.

The chassis 402 comprises a rear chassis portion 500 which is of a ladder-type construction having two parallel main beams 502, which are positioned so as to run along a longitudinal direction of the truck 100, and a plurality of short support beams 504 extending between the two parallel main beams 502. The main beams 502 may be C-section beams. This may facilitate spraying of the beams and/or assembly of the chassis.

The chassis 402 further comprises a front chassis portion 506 which is of a space-frame type construction. The front chassis portion 506 comprises two A-pillars 508 coupled to high strength beams 510 configured to provide high strength support for the large, wraparound, front screen 106. The reinforced A pillars 508 are configured to support the high strength beams 510 above and below the front screen.

The A-pillars 508 are arranged so that a longitudinal plane of each A-pillar 508 is angled relative to a longitudinal centreline of the truck 100. This may provide enhanced visibility compared to some known trucks as the A-pillars are orientated in such a way as to cause minimal disruption to an eye-line or field of view of the driver.

As the angling reduces the ability of the A-pillars 508 to withstand an impact, the wall thickness of the sections of the A-pillars 508 may be greater than would otherwise be required so as to provide sufficient protection to the driver and passengers, in particular e.g. at knee level and head levels.

The chassis 402 further comprises an intermediate chassis portion 600, which couples the rear chassis portion 500 and the front chassis portion 506. The intermediate chassis portion 600 provides a transition between the space-frame type front chassis portion 506 to the ladder-type rear chassis portion 500.

The intermediate chassis portion 600 forms a split-level chassis transition. As a result of this, the rear chassis portion 500 provides a base for supporting the cargo-carrying portion which defines the principal load-bearing surface 202 which is higher than a seat mounting surface for supporting a seat for a driver of the front chassis portion 506. In other words, the mounting surface for a seat for a driver, which may coincide with a floor of the cab, is positionable closer than the principal plane of the rear chassis portion to a driving surface. This allows for a first sitting surface in the front chassis portion 506, i.e. the driver seat 200, to be lower than the principal plane or load-bearing surface 202, so that a driver of average proportions sitting in the driver seat 200 may have an eye level height of about 180 centimetres.

The front chassis portion 506 contains, adjacent each step 204, a passenger sitting surface 602, each of which forms the base for one of the passenger seats 302A, 302B. The passenger sitting surfaces 602 may be defined by the portion of the space frame-type front chassis portion 506 on top of the wheel arches. Wheel arch liners 603 may be provided. This configuration may make improved used of the available space within the cab.

In addition to the A-pillars 508, the front chassis portion 506 comprises a reinforced crumple zone 604, designed to protect the legs of cab occupants in case of an accident, B-pillars 606, and C-pillars 608.

The split-level chassis 402 provides a low driving position while maintaining a load floor height (i.e. a height of the principal plane or load-bearing surface 202) that is comparable to that of known types of trucks. This may ensure that the truck 100 remains compatible with existing goods infrastructure.

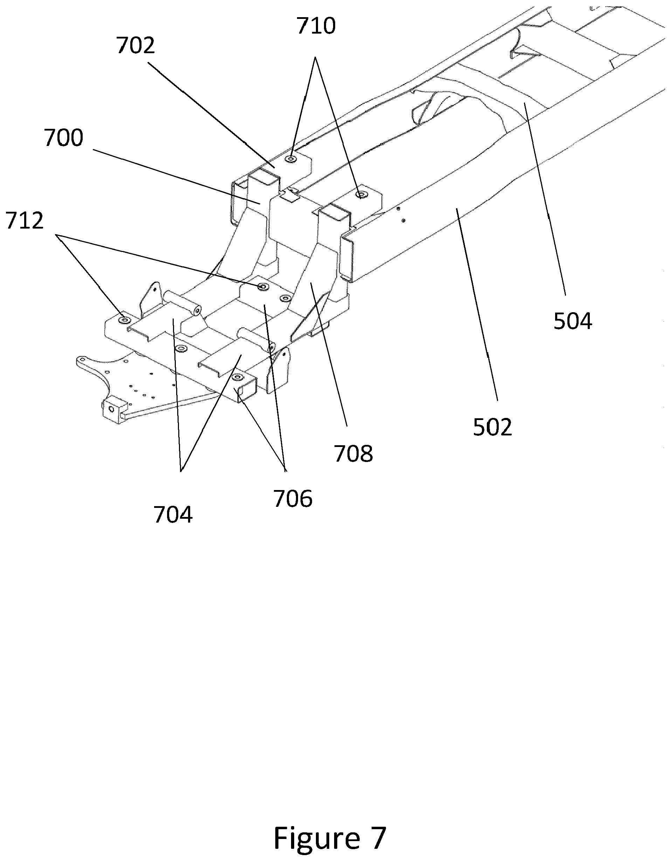

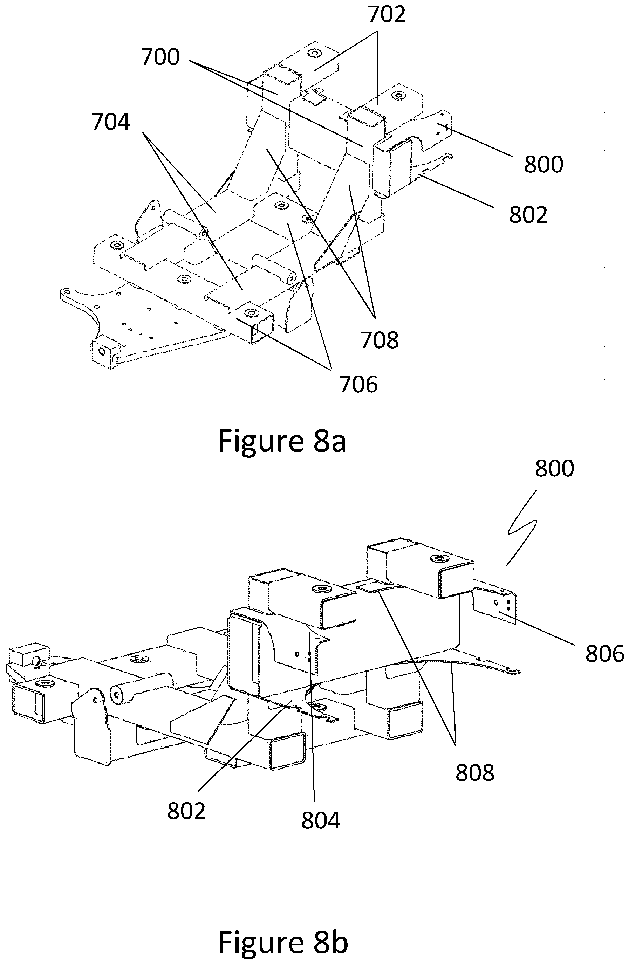

The intermediate chassis portion 600 is shown in more detail in Figures 7, 8a, and 8b. The intermediate chassis portion 600 comprises a pair of chassis members 700 positioned substantially orthogonally to the two main beams 502 of the rear chassis portion 500 and to the driving surface. Each of the pair of orthogonal chassis members 700 is coupled to a pair of rear chassis members 702 which are at substantially the same height as, and parallel to, the principal plane or load-bearing surface 202. Each of the pair of orthogonal chassis members 700 is further coupled to a pair of lower chassis members 704, which are at a lower height, i.e. closer to the driving surface, than the principal load-bearing surface 202 and parallel to the principal load-bearing surface 202. Support members 706 extend between the pair of lower chassis members 704.

As the pair of lower chassis members 704 are substantially orthogonal to the pair of orthogonal chassis members 700, brace members 708 are provided to reduced corner stresses.

The space frame of the cab portion 102 is bolted to the chassis via bolt holes 710, 712 on the pair of rear chassis members 702 and the support members 704.

The rear chassis portion 500 is fixedly coupled to the intermediate chassis portion 600 by one or more welded joints. These may be better able to withstand the stress transmitted between the intermediate chassis portion 600 and the rear chassis portion 500 than other types of couplings.

As such, as shown in Figures 8a and 8b, the truck 100 further comprises four gussets 800, 802 coupling the intermediate chassis portion 600 to the rear chassis portion 500, so as to reduce the stress concentration at the or each welded joints and/or to improve the durability of the chassis 402. In particular, the two upper gussets 800 comprise a first portion 804 which is substantially parallel to the driving surface, and a second portion 806, which is orthogonal to the first portion 804.

The first portion 804 of the upper gussets 800 is an elongate surface so as to distribute the stiffness transition between the intermediate chassis portion 600 and the rear chassis portion 500.

As is most easily appreciated from Figure 7, the gussets 800, 802 sit within flanges of the C-sections that form the two parallel main beams 502 of the rear chassis portion 500.

Both the upper gussets 800 and the lower gussets 802 comprise a curved section 808 so as to reduce the concentration of stress in the gussets 800, 802. This may also help to preserve space within the chassis envelop for placement of the battery packs and/or motors and/or other parts of the power train.

As a result of this chassis arrangement, the intermediate chassis portion 600 provides a dogleg, or step-down, or split-level or drop-level type chassis. This provides a truck in which a sitting surface for a driver is lower than the principal load-bearing surface 202.

An example truck 100 may have a height of between about 3m and about 4m, a length of between about 9m and about 11m, and a width of between about 2m and about 3m. The gross weight of the truck 100 is approximately 16 tonnes. If the truck 100 has these dimensions, the load space provided by the cargo-carrying box 110 of the cargo-carrying portion 104 has a length of between about 6m and about 8m and a volume of between about 30m^3 and about 45 m^3. This is equivalent to a capacity of between about 14 and 18 EUR-pallets, and a maximum payload of between about 8 to 10 tonnes. In an example truck 100, the step 204 may be at least 20cm deep.

## Claims

1. A chassis for an electric vehicle driveable on a driving surface, the electric vehicle comprising a cab portion and a cargo-carrying portion, the chassis comprising:
a front chassis portion configured to support a cab portion and defining a first seat mounting surface for supporting a seat for a driver;
a rear chassis portion configured to support a cargo-carrying portion, the rear chassis portion comprising a principal plane; and
an intermediate chassis portion coupling the front chassis portion and the rear chassis portion;
the chassis being **characterised in that**:
the intermediate chassis portion forms a transition between the front chassis portion and the rear chassis portion and is configured so that the first seat mounting surface for supporting a seat for a driver is positionable closer than the principal plane of the rear chassis portion to a driving surface.

2. A chassis for an electric vehicle according to Claim 1, wherein the front chassis portion comprises a space frame-type construction.

3. A chassis for an electric vehicle according to Claim 1 or 2, wherein the rear chassis portion comprises a ladder-type construction.

4. A chassis for an electric vehicle according to any of Claims 1 to 3, wherein a stiffness of the front chassis portion is greater than a stiffness of the rear chassis portion.

5. A chassis for an electric vehicle according to any of the preceding Claims, wherein the intermediate chassis portion further comprises:
a first pair of chassis members coupled to the rear chassis portion and positioned substantially orthogonal to the principal plane of the rear chassis portion; and
a second pair of chassis members coupled to the first pair of chassis members and positioned substantially parallel to the principal plane of the rear chassis portion.

6. A chassis for an electric vehicle according to Claim 5, wherein the intermediate chassis portion further comprises:
a third pair of chassis members extending between the first pair of chassis members and coupled proximate a second end to the second pair of chassis members and positioned at an angle to the principal plane of the rear chassis portion.

7. A chassis for an electric vehicle according to any of the preceding Claims, further comprising at least one gusset coupling the intermediate chassis portion and the rear chassis portion.

8. A chassis for an electric vehicle according to any of the preceding Claims, wherein the front portion of the chassis is configured so that the first seat mounting surface is located substantially on a longitudinal centreline of the chassis.

9. A chassis for an electric vehicle according to any of the preceding Claims, wherein:
the front chassis portion defines a first wheel arch liner forming a second seat mounting surface for a seat for a second cab occupant;
the front chassis portion defines a second wheel arch liner forming a second seat mounting surface for a seat for a third cab occupant; and
at least one of the second and the third seat mounting surfaces is rearward of the first seat mounting surface.

10. A chassis for an electric vehicle according to any of the preceding Claims, wherein the front chassis portion comprises a pair of A-pillars bordering a front screen, arranged so that a longitudinal plane of each A-pillar is angled relative to a longitudinal centreline of the chassis.

11. An electric vehicle comprising a cab portion, a cargo-carrying portion and a chassis according to any of the preceding Claims.

12. An electric vehicle according to Claim 11, wherein the cab portion is configured so as to be narrower at a front end than at a rear end, and is generally curved from the front end to the rear end.

13. An electric vehicle according to Claim 11 or 12, wherein a front end of a roof of the cab portion is closer to a driving surface than a rear end of a roof of the cab portion and wherein the roof is curved from a front end to a rear end, the curvature continuing onto a front end of the cargo carrying portion.

14. An electric vehicle according to any of Claims 11 to 13, further comprising a pair of moveable doors extending substantially between a floor of the cab portion and a ceiling of the cab portion and moveable between an open position in which the doors are rearward of an opening and a closed position in which the doors obstruct an opening.

15. An electric vehicle according to Claim 14, wherein the front chassis portion defines a step to facilitate entry into and exit from the cab portion, the step being positioned inside the cab portion and being adjacent the moveable doors when in the closed position.
